Europäisches Patentamt

European Patent Office

Office européen des brevets

(19)

(11) **EP 1 093 906 A2**

## (12) EUROPEAN PATENT APPLICATION

(43) Date of publication:
**25.04.2001 Bulletin 2001/17**

(51) Int. Cl.[7]: **B29D 7/01**, B29C 44/34

(21) Application number: **00121058.2**

(22) Date of filing: **27.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.10.1999 JP 29655699**

(71) Applicant:
**Daicel Chemical Industries, Ltd.
Osaka 590-8501 (JP)**

(72) Inventors:
• **Masanori Hiraishi
Osaka-shi, Osaka-fu, 559-0033 (JP)**
• **Ichiro Konishi
Hyogo-ken, 671-1543, (JP)**

(74) Representative:
**Müller-Boré & Partner
Patentanwälte
Grafinger Strasse 2
81671 München (DE)**

### (54) Stretched film having independent voids and method for producing the same

(57)    It is an object of the present invention to provide a stretched film which is light and has improved mechanical properties inherent in stretched film.

The stretched film of the present invention, containing the independent voids, is the one obtained by treating the as-stretched film to form the independent voids therein, these voids being formed by the flaky layers which keep characteristics of the as-stretched film.

These independent voids have a thickness of, e.g., 10 to 500 μm on the two-dimensional plane and 1 to 250 μm in the thickness direction, and the film has a total thickness of 5 to 2000 μm thick. The stretched film may be coated with surface layers on both sides, thickness of each surface layer being 5 to 20% of the total thickness.

Fig. 1

EP 1 093 906 A2

**Description**

This invention relates to a novel, stretched film having independent voids, and a method for producing the same, more particularly a stretched film having independent voids, useful for various areas which need light and strong films, e.g., exterior sheets for covering wall materials, various wrapping materials, cushion sheets, trays and electronic device parts, and method for producing the same.

Stretched films have been generally used in a variety of areas, e.g., wrapping films for foods, photographic base films, films for drawings, magnetic disks, magnetic tapes, flexible liquid-crystal panel boards, flexible printed circuit boards, labels, electrically insulating films for various purposes, films for condensers, surface sheets for various switches and other industrial purposes, and base films for various types of printed matter.

Biaxially stretched films, in particular, have been used for various industrial purposes, e.g., photographic films, magnetic recording media, wrapping materials, agricultural purposes, construction materials, photographic purposes and sheets for drawings, because of their excellent mechanical properties, resistance to heat, electric properties and resistance to chemicals.

These stretched films undergo post-treatment. They are coated with a varying functional material, extrusion-laminated or printed, to have a film of varying functional material thereon. For example, a wrapping film is laminated with a heat-sealing layer or printed film, photographic base film is coated with two or more photosensitive layers of different color, magnetic disks and tapes are coated with a magnetic recording material, flexible liquid-crystal panel board is coated with a transparent, electroconductive layer by evaporation, and flexible printed circuit board is laminated with copper foil or coated with a metal by evaporation. A label is printed by screen or jet printing, condenser film is generally coated with aluminum by evaporation, surface sheets for various switches are screen-printed with various printing inks, and base film for printed matter is offset-printed with a varying ink. The film for the above purposes is required to be light while having an adequate strength, in any case.

The stretched films having voids inside are proposed to have opaque, pearly luster or substitutes for paper. For example, Japanese Patent Application Laid-Open No.60-37793 discloses a film-stretching method for producing voids therein and thereby making the film opaque. Japanese Patent Application Laid-Open No.5-339408 discloses a method for producing a polyester-based film having a number of fine voids by at least monoaxially orienting the film of polyester incorporated with a thermoplastic resin incompatible with the polyester. However, these techniques fall to improve mechanical properties of the films, merely making them opaque or improving their outer appearances by providing voids therein.

Recently, supercritical fluids have been applied to various purposes. For example, Japanese Patent Application Laid-Open No.8-72058 discloses a method for recycling plastic materials using supercritical water. National Publication of Translation No.6-511278 discloses a method for removing residual additives from elastomer products using a supercritical fluid. Japanese Patent Application Laid-Open No.8-181050 discloses a method which uses supercritical carbon dioxide gas to remove a resist used for lithography. Japanese Patent Application Laid-Open No.8-197021 discloses an apparatus which uses a supercritical fluid to wash fine devices, e.g., semiconductor devices and liquid-crystal displays.

It is an object of the present invention to provide a stretched film which is light and has improved mechanical properties inherent in stretched film. It is another object of the present invention to provide a method for producing the same.

The inventors of the present invention have found, after having extensively studied to attain the above objectives, that a stretched film has greatly improved mechanical properties (in particular, bending-related properties) and, at the same time, is made lighter, when it is so structured as to have independent voids of adequate size therein, formed by the flaky layers which keep characteristics of the as-stretched film, i.e., molecular orientation, reaching the present invention.

The present invention provides the stretched film characterized in that it is treated, after being stretched, to contain independent voids formed by the flaky layers which keep characteristics of the as-stretched film.

It is preferable that the independent voids are 10 to 500 μm thick on the two-dimensional plane, i.e., in the stretching direction and direction perpendicular thereto, and 1 to 250 μm thick in the thickness direction, the flaky layers which form the independent voids are 1 to 250 μm thick, and the film as a whole is 5 to 2000 μm thick.

It is preferable that thickness of the independent voids is 5 to 50% of total film thickness on the two-dimensional plane, i.e., in the stretching direction and direction perpendicular thereto, and 1 to 20% in the thickness direction, thickness of the flaky layers which form the independent voids is 0.5 to 10%, and the film as a whole is 5 to 2000 μm thick.

The stretched film has particularly improved mechanical strength, when coated with surface layers on both sides, thickness of each surface layer being 5 to 20% of the total thickness.

The stretched film of the present invention has a bending load strength at least 1.5 times higher than that of the film before it is treated to have the independent voids.

The effects of the independent voids to improve film characteristics are especially noted with the biaxially stretched polyester and polystyrene films.

The present invention also provides a method for forming the stretched film described above, where the as-stretched film is impregnated with supercritical carbon dioxide gas and then expanded to form the independent voids.

When the stretched film is crystalline, the excellent independent voids can be formed by keeping treatment temperature at glass transition point of the film or higher but at its melting point or lower, while the as-stretched film is impregnated with supercritical carbon dioxide gas and/or expanded. When the film is amorphous; on the other hand, especially excellent independent voids can be formed by restricting the perimeters of the film while it is impregnated with supercritical carbon dioxide gas and expanded.

The stretched film of the present invention, containing independent voids, is characterized in that it is treated, after being stretched, to form therein these voids by the flaky layers which keep characteristics of the as-stretched film.

Such a stretched film has much more favorable mechanical characteristics, in particular bending-related characteristics, than the as-stretched one, and is made lighter and provided with insulating and cushion characteristics. This conceivably results from a honeycomb core type structure formed by the flaky layers which keep the mechanical strength characteristic of the as-stretched film. A stretched film having no independent voids and showing delamination, a phenomenon which is well known to occur in a stretched film, cannot be expected to have the above favorable effects, e.g., improved mechanical properties and added insulation characteristics.

Widely varying polymeric resins can be used for the stretched film of the present invention. These include polyolefin-based resins, polyester-based resins, polystyrene-based resins, ABS resins (alloyed resins of acrylonitrile, butadiene and styrene), polycarbonate-based resins, polyamide-based resins, acrylic resins, vinyl ester-based resins, polysulfone-based resins, cellulosic resins, polylactone-based resins, silicone-based resins, and alloys of two or more types of the above resins. Of these, those having a strongly polar group can suitably have independent voids therein, because of the synergistic effects with polarity of carbon dioxide gas. These include polyester-based resins (e.g., polyethylene terephthalate and polyethylene naphthalate), polystyrene-based resins (homopolymer or copolymer), and polyamide-based resins (e.g., nylon 6, 66, 612, 11 and 12).

The film for the present invention may be stretched monoaxially or biaxially, the latter being more preferable, because the independent voids can be formed more easily with the flaky layers which keep characteristics of the as-stretched film serving as the void walls, to provide notable improvements of the film characteristics. The monoaxially stretched film is fairly fibrous, and more easily broken while the independent voids are being formed. It may not have sufficiently high mechanical strength, because of difficulty in forming the independent voids.

The biaxially stretched film having an adequate degree of crystallinity will have the independent voids excellent in mechanical, chemical and electrical characteristics, coming from its crystallinity. Degree of crystallinity of the as-stretched film is an important factor in formation of the adequate independent voids. Insufficient crystallinity will retard formation of the independent voids, helping delamination to occur. Excessive crystallinity will also retard formation of the independent voids under moderate conditions.

Polyester, in particular, makes a film of favorable characteristics (e.g., resistance to chemicals and heat) and good independent voids, when biaxially stretched. It is preferable to fully consider the effects of degree of crystallinity also for the biaxially stretched polyester film. For example, the biaxially stretched polyethylene terephthalate film preferably has a degree of crystallinity of 51 to 68%, where degree of crystallinity is determined by the density method, using the following formula (1):

$$\text{Degree of crystallinity (\%)} = (\rho - \rho_a)/(\rho_c - \rho_a) \tag{1}$$

wherein, $\rho$ is density of biaxially stretched polyethylene terephthalate film, and $\rho_a$ and $\rho_c$ are density of the amorphous and crystalline portions of the above resin. The literature values of $\rho_a$ and $\rho_c$, 1.455 and 1.335 g/cc, are used in this specification.

A biaxially stretched amorphous film can easily make the film of the present invention having the independent voids. Whether the good independent voids are formed or not depends on biaxial stretching ratio and stretching orientation. The stretched film is preferably well balanced in orientation in both directions. Of the biaxially stretched amorphous films, the polystyrene film in particular can easily have good independent voids, making it a useful inexpensive material for various purposes, e.g., wrapping materials, containers and fillers.

As described above, polyesters (e.g., polyethylene terephthalate and polyethylene naphthalate) and polystyrenes make particularly preferable films, when biaxially stretched.

Total thickness of the stretched film of the present invention containing the independent voids is normally in a range from 1 to 2000 μm, although varying depending on purposes for which it is used, preferably from 5 to 2000 μm, more preferably from 20 to 1000 μm or so.

In order to greatly improve mechanical properties and lightness of the film, it is preferable to keep the independent void size and thickness of the flaky layers serving as the walls therefor at adequate levels, in addition to preventing delamination and securing independent voids.

The independent voids are preferably 10 to 500 μm thick on the two-dimensional plane, i.e., in the stretching direction and direction perpendicular thereto, more preferably 30 to 300 μm and most preferably 50 to 200 μm thick, and 1 to 250 μm thick in the thickness direction, more preferably 10 to 150 μm and most preferably 20 to 100 μm thick. When the void size is smaller than the above, the film may not have sufficiently improved mechanical properties (e.g., bending load strength) as compared with the as-stretched film. When it is larger than the above, on the other hand, mechanical properties (e.g., bending load strength) of the film may be inferior to those of the as-stretched film.

The flaky layers which form the independent voids, i.e., serving as the walls for the independent voids, are preferably 1 to 250 μm thick, more preferably 10 to 150 μm and most preferably 20 to 100 μm thick. When flaky layers are thinner than the above, improvement of mechanical properties of the film having the independent voids tends to be insufficient. When they are thicker than the above, on the other hand, the independent voids of adequate size may not be formed.

Relative thickness of the independent voids and flaky layers which form the independent voids to the total film thickness may be more important than their absolute levels. For example, according to a preferred embodiment of the present invention, thickness of the independent voids is 5 to 50% (more preferably 10 to 30% or so) of total film thickness on the two-dimensional plane, i.e., in the stretching direction and direction perpendicular thereto, and 1 to 20% (more preferably 5 to 15%) in the thickness direction, and thickness of the flaky layers is 0.5 to 10% (more preferably 1 to 7% or so), and the film as a whole is 5 to 2000 μm thick (more preferably 20 to 1000 μm thick).

The stretched film of the present invention has particularly improved mechanical strength, when coated with surface layers (free of the independent voids) on both sides, thickness of each surface layer being 5 to 20% of the total thickness. When coated with these layers, the film will have still improved mechanical properties and shows film-like appearances.

The stretched film of the present invention, containing the independent voids, preferably has at least a 1.5 times (e.g., 1.5 to 10 times or so) higher bending load strength than the as-stretched film, more preferably at least 1.8 times (e.g., 1.8 to 10 times or so) higher.

The stretched film of the present invention, containing the independent voids, may be obtained by impregnating the as-stretched film and expanding the film to form the independent voids therein.

The as-stretched film as the stock for the film of the present invention is normally 1 to 500 μm thick or so. It is 10 to 100 μm thick or so for a wrapping film, around 100 μm thick for a photographic base film, 50 to 100 μm thick or so for a magnetic disk, 1 to 10 μm thick or so for a magnetic tape, around 100 μm thick for a flexible liquid-crystal panel board, 1 to 300 μm thick or so for a label, 10 to 100 μm thick or so for a flexible printed circuit board, 1 to 10 μm thick or so for a condenser film, 10 to 200 μm thick or so for a surface sheet for various switches, and 10 to 100 μm thick or so for a base film for various types of printed matter. The as-stretched film is at least doubled in thickness, when treated to contain the independent voids by the method of the present invention. Therefore, it is recommended to use the as-stretched film having a thickness 50% or less of a desired thickness of the final film.

Carbon dioxide ($CO_2$) has a critical temperature of 31°C and critical pressure of 72.8 atms (7.38 MPa), and supercritical carbon dioxide gas is at or above the critical temperature and pressure.

The as-stretched film may be impregnated with supercritical carbon dioxide gas by various methods. For example, the as-stretched film sheets may be put batchwise in a supercritical container filled with supercritical carbon dioxide gas, or the as-stretched film may be continuously charged in a supercritical carbon, dioxide zone to be treated there. Japanese Patent Application Laid-Open No.4-268344 discloses the latter approach, where the roll-shaped film is continuously supplied to a supercritical or subsupercritical carbon dioxide gas zone, formed by oil seal.

It is preferable to immerse the as-stretched film in supercritical carbon dioxide gas at glass transition point of the film or higher but at its melting point or lower, when it is crystalline. It is more preferable to immerse it in the fluid at near its melting point, in order to efficiently produce the independent bubbles in a short time.

It is preferable, when the film is amorphous, to immerse the as-stretched film in supercritical carbon dioxide gas at glass transition point of the film or higher or at its melting point or lower, while restricting the perimeters of the film to prevent its shrinkage.

The independent bubbles are produced more efficiently as pressure at which the as-stretched film is immersed increases. However, the preferable pressure level will be 100 to 400 atms or so, in consideration of operability and investment cost.

In the method of the present invention, the as-stretched film is expanded by evaporating carbon dioxide gas, e.g., by releasing pressure. Temperature at which the film is expanded is glass transition point of the film or higher or its melting point or lower. However, it is preferably glass transition point of the film or higher but its melting point or lower, in order to efficiently produce the good independent voids in the film. It is also preferable to expand the film, when it is amorphous, at glass transition point of the film or higher but at its melting point or lower, while restricting (or fixing) the perimeters of the film to prevent its shrinkage.

Pressure at which the film is expanded is not limited, but preferably normal pressure in consideration of, e.g., operability and workability.

In the stretched film of the present invention, containing the independent voids, size of the independent voids, thickness of the flaky layers forming the independent voids and thickness of the surface layer can be adjusted by adequately selecting temperature and pressure at which the film is impregnated with supercritical carbon dioxide gas, time for which it is impregnated with the supercritical fluid, and temperature and pressure at which it is expanded.

Carbon dioxide gas released from the film surface during the film expansion step is preferably recovered to prevent global warming. It can be recovered by a supercritical fluid recovering apparatus disclosed by Japanese Patent Application Laid-Open No.8-197021. This apparatus can securely prevent release of carbon dioxide gas into the atmosphere. Recovered carbon dioxide gas can be easily recycled into the supercritical or subsupercritical fluid.

The method of the present invention efficiently produces the independent voids in the stretched film, where the walls of these voids are formed by the flaky layers which keep characteristics of the as-stretched film. Therefore, the stretched film containing these voids has much improved mechanical properties (e.g., bending strength) and a much lower apparent density (and hence is much lighter) than the as-stretched film. At the same time, it has improved insulating characteristics, because of the voids being filled with carbon dioxide. The so-called expansion ratio is roughly 3, although varying depending on stock type and expansion conditions, reducing the original thermal conductivity to one-thirds or less. The independent voids greatly improve cushion characteristics of the film, even when it is 2 mm thick or thinner, with the result that the film, when used for wrapping materials or containers, should have greatly improved function of protecting the content, and also improve electrical properties (e.g., electrical insulation characteristics) of the film.

Examples

The present invention is described more concretely by EXAMPLES, which by no means limit the present invention.

EXAMPLE 1

A biaxially stretched polyethylene terephthalate (PET) film (thickness: 250 $\mu$m, Diafoil, degree of crystallinity: 54%) was immersed in supercritical carbon dioxide gas under the conditions shown in Table 1, and then withdrawn to release carbon dioxide into the atmosphere. The polyethylene terephthalate had a glass transition temperature of approximately 90°C.

The stretched film thus prepared was bending-tested to have the load-displacement curve, by which its bending load strength was determined. The results are given in Table 1.

Its bending load strength (N) was determined by the following procedure:

A load was applied to a 25 mm wide, 40 mm long sample at the center to cause a bending displacement. The bending load strength (N) is defined as the stress at a displacement rate of 10 mm/min and displacement of 8 mm.

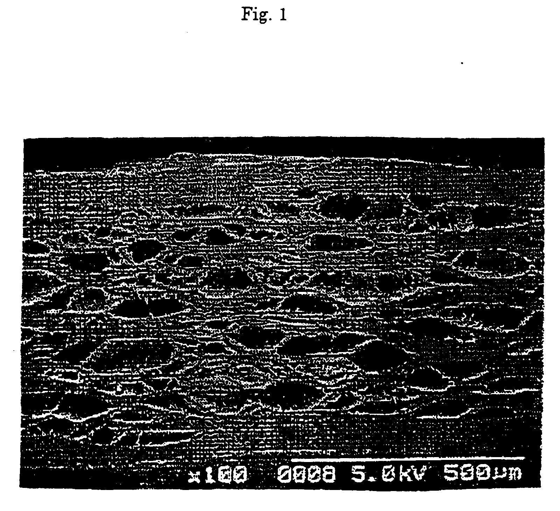

The section, i.e., plane perpendicular to the surface, of the stretched film was observed by a scanning electron microscope (SEM). Figure 1 presents the SEM photograph, showing its sectional structure. The stretched film showed no delamination, contained the independent voids approximately 100 $\mu$m thick on the two-dimensional plane and 50 $\mu$m thick in the thickness direction, and was coated with approximately 80 $\mu$m thick surface layers on both sides. Its total thickness was confirmed to increase from 250 $\mu$m to approximately 650 $\mu$m by the $CO_2$ treatment. It was also confirmed that the stretched film had a drastically increased bending load strength, 5 times higher than that of the sample prepared by COMPARATIVE EXAMPLE described later.

COMPARATIVE EXAMPLE 1

The same biaxially stretched polyethylene terephthalate film as that used for EXAMPLE 1 was bending-tested without having been treated with $CO_2$, in the same manner as used for EXAMPLE 1, to have the load-displacement curve, by which its bending load strength was determined. The results are given in Table 1.

EXAMPLE 2

The same biaxially stretched polyethylene terephthalate film as that used for EXAMPLE 1 was immersed in supercritical carbon dioxide gas under the conditions shown in Table 1, and then withdrawn to release carbon dioxide into the atmosphere (EXAMPLES 2-A and 2-B). Each of the stretched films thus prepared was bending-tested to have the load-displacement curve, by which its bending load strength was determined. The results are given in Table 1.

The SEM analysis of the section, i.e., plane perpendicular to the surface, of the stretched film indicated that the independent voids were formed in each of the stretched films. These voids were larger than those shown in Figure 1, and their number per unit area was smaller.

It was confirmed that the stretched film had an apparently increased bending load strength, approximately 2.5 times higher than that of the sample prepared by COMPARATIVE EXAMPLE 1.

EXAMPLE 3

The same biaxially stretched polyethylene terephthalate film as that used for EXAMPLE 1 was immersed in supercritical carbon dioxide gas under the conditions shown in Table 1, and then withdrawn to release carbon dioxide into the atmosphere (EXAMPLES 3-A and 3-B). Each of the stretched films thus prepared was bending-tested to have the load-displacement curve, by which its bending load strength was determined. The results are given in Table 1.

The SEM analysis of the section, i.e., plane perpendicular to the surface, of the stretched film indicated that the independent voids were formed in each of the stretched films. These voids were larger than those shown in Figure 1, and their number per unit area was smaller.

It was confirmed that the stretched film had an apparently increased bending load strength, approximately 3.2 times higher for the sample prepared by EXAMPLE 3-A and 2.4 times higher for the sample prepared by EXAMPLE 3-B than that of the sample prepared by COMPARATIVE EXAMPLE 1.

COMPARATIVE EXAMPLE 2

The same biaxially stretched polyethylene terephthalate film as that used for EXAMPLE 1 was immersed in supercritical carbon dioxide gas at below glass transition point of the polyethylene terephthalate, as shown in Table 1, and then withdrawn to release carbon dioxide into the atmosphere (COMPARATIVE EXAMPLES 2-A and 2-B). Each of the stretched films thus prepared was bending-tested to have the load-displacement curve, by which its bending load strength was determined. The results are given in Table 1.

The SEM analysis of the section of each of these films, i.e., plane perpendicular to the surface, showed no formation of the independent voids.

EXAMPLE 4 and COMPARATIVE EXAMPLE 3

A biaxially stretched polystyrene (OPS) film (thickness: 210 μm, Daicel Kagaku Kogyo) was immersed in supercritical carbon dioxide gas under the conditions shown in Table 1, and, then withdrawn to release carbon dioxide into the atmosphere (EXAMPLES 4-A and 4-B). The perimeters of each of these films were fixed, while it was immersed in supercritical carbon dioxide and carbon dioxide was released into the atmosphere. The polystyrene had a glass transition point of approximately 100°C.

Each of these stretched films thus prepared and the one not treated with carbon dioxide (COMPARATIVE EXAMPLE 3) were bending-tested to have the load-displacement curves, by which their bending load strengths were determined. The results are given in Table 1.

The SEM analysis of the section, i.e., plane perpendicular to the surface, of each of the stretched films prepared by EXAMPLES 4-A and 4-B showed the structure similar to that shown in Figure 1.

It was confirmed that the stretched films had an apparently increased bending load strength, approximately 2.3 times higher than that of the sample prepared by COMPARATIVE EXAMPLE 3 for both films prepared by EXAMPLES 4-A and 4-B.

EXAMPLE 5 and COMPARATIVE EXAMPLE 4

A biaxially stretched polyethylene terephthalate film (thickness: 250 μm, Toray, degree of crystallization: 54%) was immersed in supercritical carbon dioxide gas under the conditions shown in Table 1, and then withdrawn to release carbon dioxide into the atmosphere (EXAMPLES 5-A and 5-B).

Each of these stretched films thus prepared and the one not treated with carbon dioxide (COMPARATIVE EXAMPLE 4) were bending-tested to have the load-displacement curves, by which their bending load strengths were determined. The results are given in Table 1.

The SEM analysis of the section, i.e., plane perpendicular to the surface, of each of the stretched films prepared by EXAMPLES 4-A and 4-B indicated that the independent voids were formed in each of the stretched films. These voids were larger than those shown in Figure 1, and their number per unit area was smaller.

It was confirmed that the stretched films had an apparently increased bending load strength, approximately 1.9 to 2.2 times higher than that of the sample prepared by COMPARATIVE EXAMPLE 4 for both films prepared by EXAMPLES 5-A and 5-B.

EXAMPLE 6 and COMPARATIVE EXAMPLE 5

Biaxially stretched polyethylene terephthalate film [thickness: 125 μm for EXAMPLE 6-A and 75 μm for EXAMPLE 6-B, Toray, degree of crystallization: approximately 48% for both] were immersed in supercritical carbon dioxide gas under the conditions shown in Table 1, and then withdrawn to release carbon dioxide into the atmosphere (EXAMPLES 6-A and 6-B).

Each of these stretched films thus prepared and each of the ones not treated with carbon dioxide (125 μm thick one for COMPARATIVE EXAMPLE 5-A, and 75 μm thick one for COMPARATIVE EXAMPLE 5-B) were bending-tested to have the load-displacement curves, by which their bending load strengths were determined. The results are given in Table 1.

The SEM analysis of the section, i.e., plane perpendicular to the surface, of each of the stretched films prepared by EXAMPLES 6-A and 6-B showed the structure similar to that shown in Figure 1, although their thickness was fairly different.

Each of the stretched films prepared by EXAMPLES 6-A and 6-B showed no delamination, and contained the independent voids having a thickness approximately 15% of total film thickness on the two-dimensional plane and 8% in the thickness direction. Each was coated with surface layers on both sides, where thickness of each surface layer was approximately 12% of the total thickness.

It was confirmed that total thickness was increased to 300 μm for the one prepared by EXAMPLE 6-A and to approximately 180 μm for the one prepared by EXAMPLE 6-B. It was also confirmed that the stretched films had an apparently increased bending load strength, approximately 3 times higher than that of the sample prepared by COMPARATIVE EXAMPLES 5-A and 5-B for both films prepared by EXAMPLES 6-A and 6-B.

Table 1

|  | Films | Immersion conditions | $CO_2$ releasing conditions | Bending load strength |
|---|---|---|---|---|
| EXAMPLE 1 | PET | 140°C, 20.2MPa, for 4min. | Allowed to stand at room temperature | 5.89N |
| COMPARATIVE EXAMPLE 1 | PET | - | - | 1.18N |
| EXAMPLE 2-A | PET | 120°C, 20.2MPa, for 30min. | Allowed to stand at room temperature | 27.5N |
| EXAMPLE 2-B | PET | 100°C, 20.2MPa, for 120min. | Allowed to stand at room temperature | 24.7N |
| EXAMPLE 3-A | PET | 120°C, 20.2MPa, for 30min. | 120°C for 5 min. | 37.3N |
| EXAMPLE 3-B | PET | 100°C, 20.2MPa, for 120min. | 100°C for 5 min. | 28.4N |
| COMPARATIVE EXAMPLE 2-A | PET | 60°C, 20.2MPa, for 30min. | 60°C for 5 min. | 11.8N |
| COMPARATIVE EXAMPLE 2-B | PET | 40°C, 30.3MPa, for 120min. | Allowed to stand at room temperature | 11.7N |
| EXAMPLE 4-A | OPS | 105°C, 20.2MPa, for 2min. | Allowed to stand at room temperature | 34.3N |
| EXAMPLE 4-B | OPS | 110°C, 20.2MPa, for 1min. | Allowed to stand at room temperature | 37.3N |
| COMPARATIVE EXAMPLE 3 | OPS | - | - | 15.7N |
| EXAMPLE 5-A | PET | 120°C, 20.2MPa, for 30min. | Allowed to stand at room temperature | 20.6N |
| EXAMPLE 5-B | PET | 140°C, 20.2MPa, for 4min. | Allowed to stand at room temperature | 23.7N |
| COMPARATIVE EXAMPLE 4 | PET | - | - | 10.8N |

Table 1 (continued)

|  | Films | Immersion conditions | $CO_2$ releasing conditions | Bending load strength |
|---|---|---|---|---|
| EXAMPLE 6-A | PET | 140°C, 20.2MPa, for 4min. | Allowed to stand at room temperature | 4.12N |
| COMPARATIVE EXAMPLE 5-A | PET | - | - | 1.37N |
| EXAMPLE 6-B | PET | 140°C, 20.2MPa, for 4min. | Allowed to stand at room temperature | 0.98N |
| COMPARATIVE EXAMPLE 5-B | PET | - | - | 0.29N |

The stretched film of the present invention, containing the independent voids formed by the flaky layers which keep characteristics of the as-stretched film, can be made lighter without deteriorating the mechanical strength characteristic of the as-stretched film. It has a much higher bending strength, and improved insulation and cushion characteristics than the as-stretched one, and hence can going into various industrial areas as the novel, light and strong material. In addition to the improved characteristics, its thickness is also increased, which makes the stretched film still lighter depending on purposes for which it is used.

**Claims**

1. A stretched film obtained by treating the as-stretched film to have independent voids therein, wherein said independent voids are formed by flaky layers which keep characteristics of the as-stretched film.

2. The stretched film according to Claim 1, wherein said independent voids are 10 to 500 μm thick on the two-dimensional plane, ( in the stretching direction and direction perpendicular thereto), and 1 to 250 μm thick in the thickness direction, the flaky layers which form the independent voids are 1 to 250 μm thick, and the film as a whole is 5 to 2000 μm thick.

3. The stretched film according to Claim 1 or 2, wherein thickness of said independent voids is 5 to 50% of total film thickness on the two-dimensional plane, (in the stretching direction and direction perpendicular thereto), and 1 to 20% in the thickness direction, thickness of the flaky layers which form the independent voids is 0.5 to 10%, and the film as a whole is 5 to 2000 μm thick.

4. The stretched film according to one or more of Claims 1 to 3, which is coated with surface layers on both sides, thickness of each surface layer being 5 to 20% of the total thickness.

5. The stretched film according to one or more of Claims 1 to 4, whose bending load strength is at least 1.5 times higher than that of the as-stretched film.

6. The stretched film according to one or more of Claims 1 to 5, which is a biaxially stretched one containing the independent voids.

7. The stretched film according to one or more of Claims 1 to 6, which is a biaxially stretched polyester film.

8. The stretched film according to one or more of Claims 1 to 6, which is a biaxially stretched polystyrene film.

9. A method for producing the stretched film according to one or more of Claims 1 to 8, wherein said as-stretched film is impregnated with supercritical carbon dioxide gas and then expanded to form the independent voids.

10. The method for producing the stretched film according to Claim 9, wherein said as-stretched film is crystalline, and impregnated with supercritical carbon dioxide gas at glass transition point of said as-stretched film or higher but at its melting point or lower.

11. The method for producing the stretched film according to Claim 9 or 10, wherein said as-stretched film is crystalline, and expanded at glass transition point of said as-stretched film or higher but at its melting point or lower.

12. The method for producing the stretched film according to one ore more of Claims 9 to 11 wherein said as-stretched film is amorphous, and impregnated with supercritical carbon dioxide gas and then expanded while its perimeters are restricted.

Fig. 1

x100 0008 5.0kV 500µm